# EUROPEAN PATENT SPECIFICATION

(11) **EP 2 373 899 B1**
(45) Date of publication and mention of the grant of the patent: **08.02.2017**
(21) Application number: 09815455.2
(22) Date of filing: 04.12.2009
(51) Int. Cl.: F16C 33/60, F16C 33/64

(54) **COMPOUND STEEL BEARINGS AND METHODS OF MANUFACTURING**
VERBUNDSTAHLLAGER UND HERSTELLUNGSVERFAHREN
PALIERS EN ACIER COMPOSITE

(30) Priority: 04.12.2008 US 119873 P
(43) Date of publication of application: 12.10.2011
(73) Proprietor: Corts, Jochen, 42855 Remscheid (DE)
(72) Inventor: Corts, Jochen, 42855 Remscheid (DE)
(74) Representative: Spencer, Michael David
(86) International application number: PCT/IB2009/007920
(87) International publication number: WO 2010/064145

(56) References cited:
- DE-A1- 2 648 144
- DE-A1- 10 331 061
- DE-A1-102004 027 992
- DE-A1-102005 011 023
- DE-U1-202004 007 831
- FR-A5- 2 109 451
- US-A1- 2003 039 419

## Description

### TECHNICAL FIELD

The present disclosure is directed to compound steel bearings. More particularly, the disclosure relates to compound steel bearings and manufacturing processes and applications including, but not limited to, wind generators and other heavy equipment. A variety of ring and flat bearings may be manufactured utilizing aspects of the present invention.

### BACKGROUND OF THE INVENTION

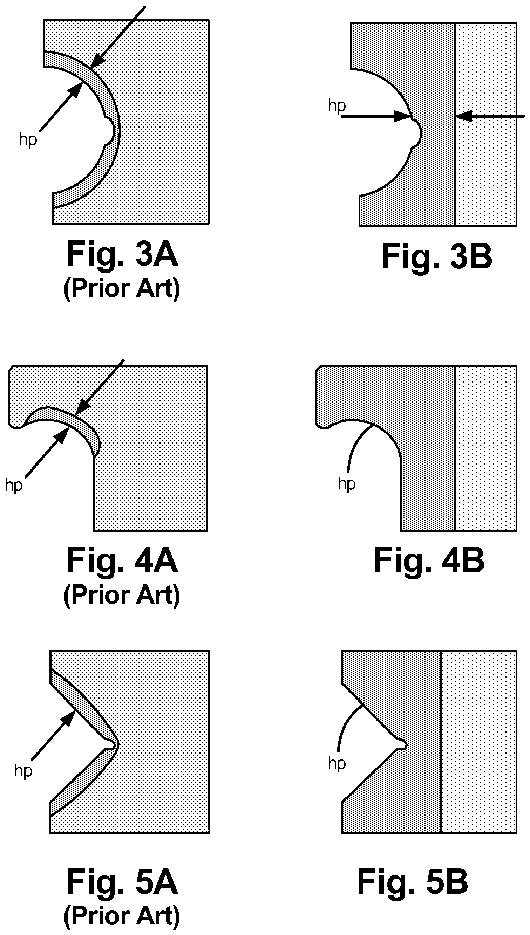

Due to well known metallurgical and chemical properties, the thickness of the hardened layer, particularly when using the case hardening processes, is strictly limited. As a consequence, the bearing engineer is most often constrained by the depth of the hardened layer for a given load and/or environment. For example, Figures 3a, 4a and 5a illustrate various cross- sectional views taken through steel bearing raceways with the hardness patterns indicated as "hp". The depth of the hardened steel is limited, particularly with induction-hardened raceways.

Prior to the present invention, large bearing requirements could not fully and satisfactorily be met in a steel race, for such a large bearing, because the race metal in the vicinity of the rolling elements was either too soft or incapable of being hardened, or the metal of portions of the race in which gear teeth were to be cut or fastening means were to be machined or welded was too hard and brittle to provide fully the desired ductility, toughness and strength characteristics. If the metal portion of a bearing race to be contacted by the balls or other rotating elements is too soft because it is not hardenable to a sufficient degree this portion of the race will deform or wear or otherwise harmfully affect the characteristics of the bearing; but if the remaining metal portions of the race are too hard, they will be so brittle and subject to cracking that they will not be sufficiently strong, tough and ductile for the service they should perform and will not be capable of being machined to form structures such as gear teeth, etc., that have sufficient tensile strength and toughness or of being satisfactorily welded.

DE-A-10331061 discloses annular composite workpieces, in particular antifriction bearing rings, and to a cold-rolling method for producing said rings from at least two hollow cylindrical workpieces consisting of different material or identical material with different strengths. DE-A-202004007831U1 discloses a roller bearing with first and second bearing rings and several sets of roller bodies rolling between the rings, whereby at least one ring consists of at least three segments in the peripheral direction. US-A-2003039419 discloses a plain bearing for the transmission of high axial forces and great flexural moments with slight relative movements, one co-operating bearing component has an annular rib which engages into an annular groove provided on another co-operating bearing component.

### SUMMARY OF THE INVENTION

The present invention relates to processes and products of processes for making compound steel bearings having different characteristics at different portions of the bearing, e.g., at the upper/lower or inner/outer peripheries of annular members. For example, the members may be formed as annular blanks for bearing races or the races themselves, in which at one periphery of the member the metal can be hardened, to a desired high degree of hardness and at portions away from such periphery, the metal may have substantially less hardness and greater ductility and toughness.

Embodiments of the present invention may be used for various purposes, though exceptional advantages can be attained when used in bearing races for large diameter bearings, such as bearings for supporting rotating parts of equipment such as wind towers for power generation, and when used in processes for making annular blanks out of which such bearing races are made and for making races from such blanks. Therefore the invention will be discussed in connection with such uses.

Bearing races desirably include metal that is capable of being substantially hardened and hence rendered quite brittle at and for some distance below surfaces of the grooves or raceways against which bear the balls or other rolling or sliding elements of the bearings to minimize wear. Nevertheless, such a race must also include metal away from such hard metal that is sufficiently ductile and tough and possesses sufficient tensile strength to resist the stresses, forces and shocks to which the race may be subjected in service; and often such a race must include metal sufficiently ductile, tough and strong to permit machining the periphery opposite the raceway to gear teeth that can be used to rotate the race by power means to, for example, swing portions of a wind tower, or to permit machining or welding of parts such as fastening means at locations away from the raceway.

Therefore embodiments of the present invention provide a novel bearing comprised of two or more significantly different alloys. With this solution, not only can the alloys be varied, but also the thicknesses of the through hardened zones or layers can be predetermined based on the necessities of the process or bearing application. As a result, the thickness of the through hardened layer is not limited by non-process or application based parameters like the carbon diffusion into the surfaces of roller bearing steels.

Embodiments of the present invention also relate to the production of the inner and outer races of roller bearings from dissimilar compound materials. In some embodiments, basic compound rings can be ring-rolled to the desired diameters, while the ratio remains constant between the high alloyed bearing surface layer and the mild steel basic layer. With such a process the depth of through-hardening may not be limited by fixed carbon diffusion parameters. By the selective combination of thickness ratio between the shell and core part of a compound steel ring, the characteristics of the rings can be predetermined based on the requirements of the application and/or anticipated environment of use.

Embodiments of the invention are particularly applicable for larger bearings, where the ratio between the through-hardened layer and the base material continues to decrease with an increasing diameter (due to the limited hardening depth). A competing consideration is that the desired loads of these large bearings continues to increase with the diameter.

Prior art solutions for large diameter bearings include multi-row bearings having increased in size and weight In comparison, load-equivalent large bearing embodiments of the present invention would be significantly lighter and stronger as multiple rows of bearings may not be required.

Embodiments of the present invention concern bearings for the transmission of high axial forces and large flexural moments with small relative movements between the co-operating bearing components. Wind power installations would benefit with such a compound bearing between its pylon-supported machine head and the pylon head.

Bearings of the present invention involving the demand profile as specified above can be used for example as pivot bearings in cranes, certain leisure and pleasure installations and indeed wind power installations (as so-called azimuth bearings). In that respect, a structural problem arises out of the fact that, even in the case of a vertical rotary axis, the forces, both in the direction of an applied load and also in the lifting-off direction, have to be carried by the bearing.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the scope of the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

### BRIEF DESCRIPTION OF THE DRAWINGS

FIG. 1 is a top plan view of a compound steel roller bearing in accordance with the present invention.
FIG. 2 is a cross-sectional view of the bearing of FIG. 1.
FIG. 3a - 3b are cross-sectional views of bearing raceways providing a comparison between prior art raceways and a raceway in accordance with the present invention.
FIG. 4a - 4b are cross-sectional views of bearing raceways providing a comparison between prior art raceways and a raceway in accordance with the present invention.
FIG. 5a - 5b are cross-sectional views of bearing raceways providing a comparison between prior art raceways and a raceway in accordance with the present invention.
FIG. 6 is a cross-sectional view of another embodiment of a bearing in accordance with the present invention.
FIG. 7 is a cross-sectional view of another embodiment of a bearing in accordance with the present invention.
FIG. 8 depicts a manufacturing process of a portion of the bearing of FIG. 7.
FIG. 9 depicts another manufacturing process of a portion of the bearing of FIG. 7.
FIG. 10 depicts material processing utilized in a method of manufacturing a bearing in accordance with the present invention.
FIG. 11 depicts a method of manufacturing portions of a bearing in accordance with the present invention.
FIG. 12 depicts another method of manufacturing portions of a bearing in accordance with the present invention
FIG. 13 depicts a ring rolling process suitable for use during a method of manufacturing portions of a bearing in accordance with the present invention.
FIG. 14 depicts a ring rolling process suitable for use during a method of manufacturing portions of a bearing in accordance with the present invention.
FIG. 15 depicts a wind generator utilizing bearing technology of the present invention..
FIG. 16 depicts the interior aspects of the wind generator of FIG. 15.
FIG. 17 depicts an embodiment of a annular ring bearing utilizing aspects of the present invention and adapted for use with the wind generator of FIG. 15

### DETAILED DESCRIPTION OF THE INVENTION

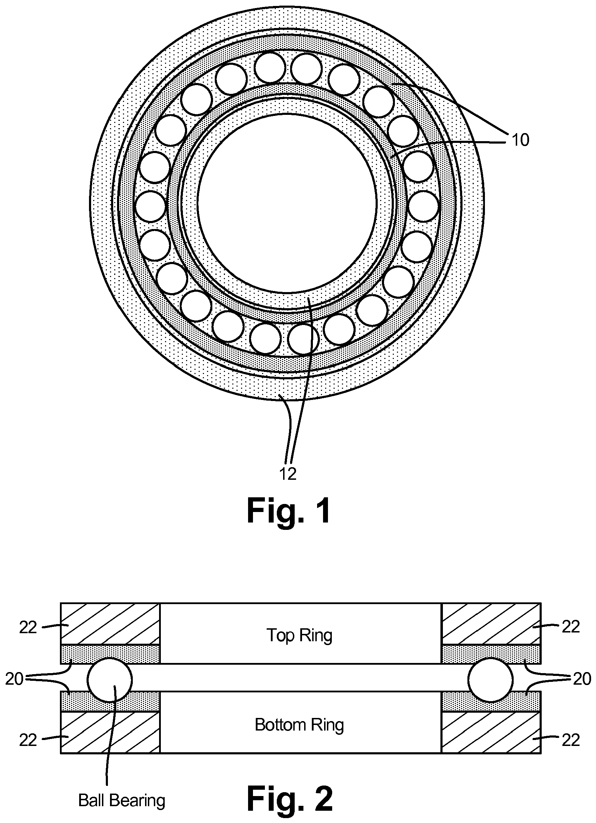

Figure 1 illustrates a top plan view of a compound steel roller bearing in accordance with the present invention. As described in greater detail herein, the roller bearing includes high alloy bearing portions 10 and mild steel bearing portions 12.

Figure 2 depicts a side view of a cross-section taken through an annular bearing in accordance with the present invention. Similar to the embodiment of FIGURE 1, the bearing includes high alloyed layers 20 and mild steel layers 22. Such annular bearings may be particularly well suited as azimuth bearings for wind power generators.

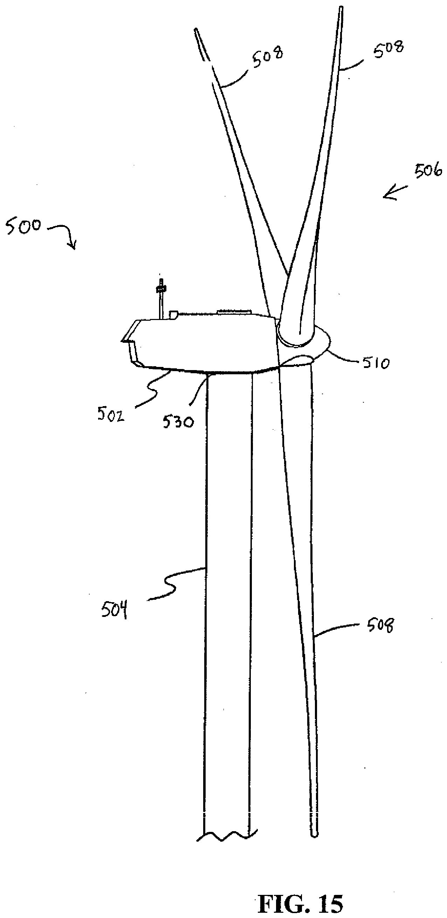

Such annular compound steel bearings are well suited for the transmission of high axial forces and large flexural moments with small relative movements between the co-operating bearing components. A wind power installation may include such a bearing between its pylon-supported machine head and the pylon head, such as disclosed in FIGS. 15-16.

Bearings of the present invention involving the demand profile as specified above can be used for example as pivot bearings in cranes or other large equipment. In another embodiment, bearings of the present invention may serve as replacements to hydrodynamic oil film bearings, such as MORGOIL bearings manufactured by the Morgan Company. Hydrodynamic bearings have been used in very high load applications like the bottom and top back-up roll chocks in rolling mills. Bearings of the present invention may also accept increased working loads in the limited space situation of work roll chocks in rolling mills.

FIGURES 3 - 5 provide comparative illustrations between prior art raceways and raceways of bearings manufactured in accordance with the present invention. Figures 3A, 4A and 5A illustrate prior art raceways (taken in cross-section) having a hardened portion, hp. In comparison, Figures 3B, 4B and 5B illustrate raceways of bearings of the present invention wherein the hardened portions, hp, have a significantly greater depth dimension. Importantly, the depth of the hardened portions are not limited by known hardening processes, but rather a designer could select a hardened portion depth as a function of anticipated loads, etc.

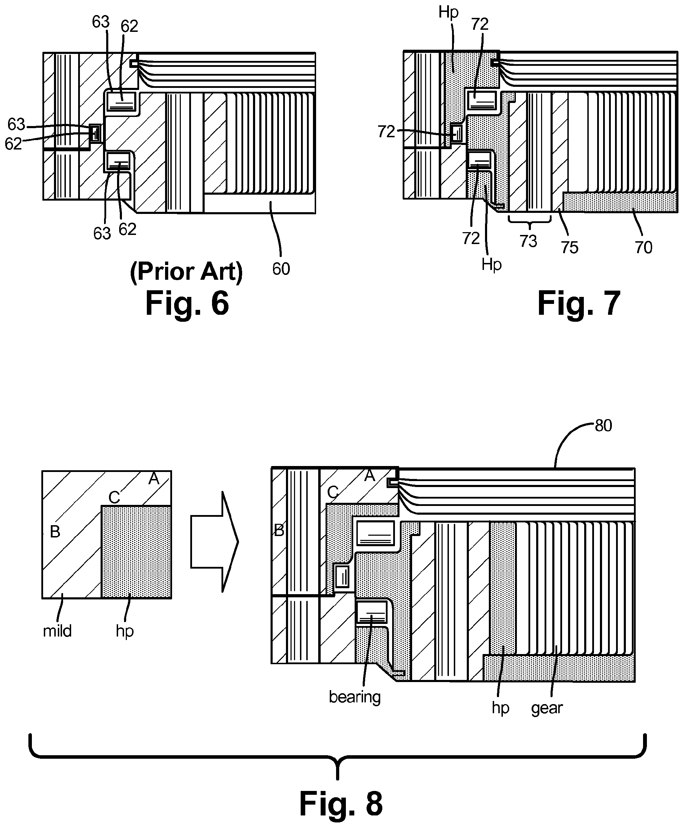

FIGURE 6 depicts a cross-section taken through a prior art large gear bearing having an internal gear 60 rotating on bearings 62 in contact with outer raceway 63 of external ring 64. Again, the depth of the hardened portions of the raceways is limited as a function of known manufacturing processes. In comparison, FIGURE 7 depicts a similar large gear bearing having an internal gear 70 rotating on bearings 72 in contact with raceways 73 of external ring 74. In this embodiment, entire portions of the internal and external rings are defined by hardened steel. As shown in FIGURE 7, the hardened portions of the bearing are designated "hp". A retention structure 73 includes an aperture 75 through which a fastener (not shown) is received to secure the internal gear 70 to an underlying support structure (not shown).

FIGURE 8 depicts a manufacturing process through which a raw profiled ring is used to fabricate a portion of bearing 80 in accordance with the present invention.

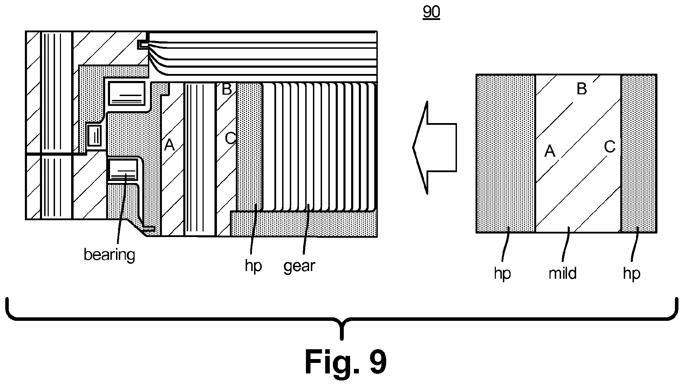

FIGURE 9 depicts a manufacturing process through which a raw profiled ring is used to fabricate a portion of bearing 90 in accordance with the present invention.

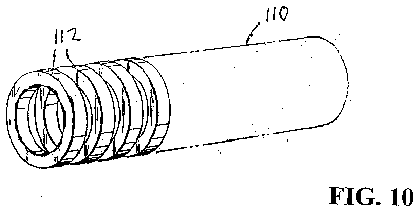

A preferred method of manufacturing a ring bearing in accordance with the present invention is disclosed with reference to FIGS. 10 -14. For convenience the process will be first discussed below in connection with an outer race. In making the outer race, the first step is making a blank or billet having two or more different steel alloys. As shown in FIG. 10, the blank 110 can then be cut into annular ring members or rings 112 for subsequent working.

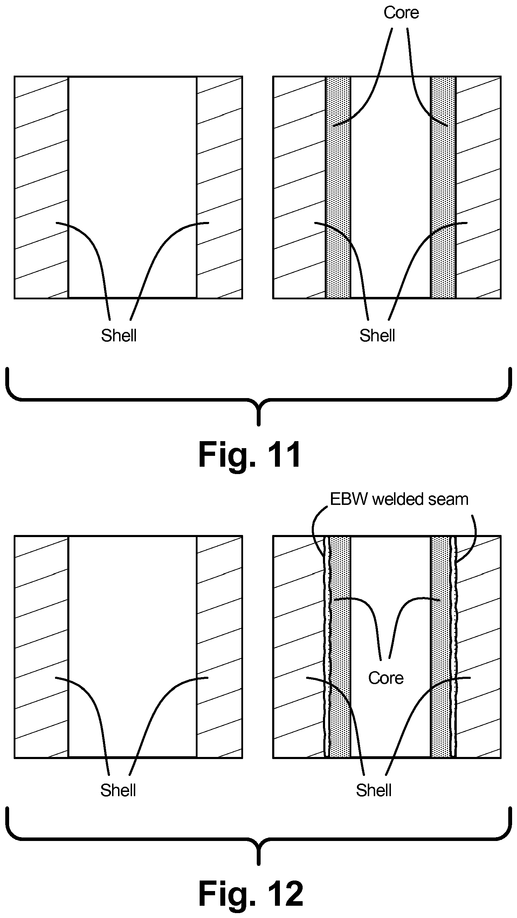

FIGURE 11 discloses one approach to making a billet wherein a centrifugal casting method is used to first form a shell layer and then form a core layer. The particular alloys used in the shell and core may vary as a function of bearing application, environment, loads, etc. Through proper shell and core alloy selection, the carbon content across the ring would vary between its inner and outer periphery.

FIGURE 12 discloses another approach to making a billet wherein a shell and core are welded together, such as via an electron beam welding (EBW) process. The welding process desirably creates a relatively narrow fusion zone between the shell and core elements. A particularly advantageous feature of the EBW process is that elements with vastly dissimilar characteristics can be joined.

Once the billet is formed, it is cut into annular ring members or rings 112 (FIG. 11) for subsequent working. Next, the ring can be heated to hot-working or forging temperature. Thereafter, the ring can be flattened in a conventional hydraulic press. In alternative processes, the hot-working or forging of the ring may be skipped with the ring proceeding to a cold working process.

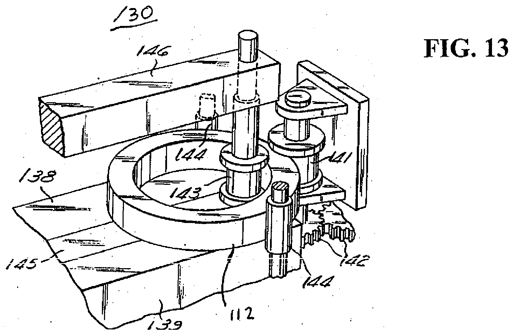

Apparatus 130 of the type indicated in FIG. 13 may advantageously be used for the roll forging or hot working. In this apparatus, the ring 112 is supported on the upper surface 138 of a base 139 and is rotated while it is pressed radially between a drive roll 141 that is positively driven by suitable drive means such as gears 142, and a freely rotatable pressure roll 143 that is pressed on the ring 112 toward the drive roll 141, the ring 112 being further guided by side rolls 144. Roll 143 is rotatably supported by upper and lower longitudinally movable members 145 and 146 that can be moved by suitable means, not shown, to cause roll 143 to press the ring 112 against the drive roll 141 with forces on the inner and outer peripheral sides of the ring sufficient to cause the desired hot working. In the apparatus illustrated, members 145 and 146 can be moved to retract the roll 143 from its pressing position, and member 146 can also be raised to lift the roll 143 from member 145 to permit a ring 112 to be inserted into and removed from the apparatus. Side rolls 144 are also movable toward and away from ring 112 to permit the ring to be put into and removed from the machine.

This hot working by roll forging around the entire circumferences of the ring substantially decreases the cross sectional thickness of the ring between its inner and outer peripheries, and substantially enlarges the diameter of the inner and outer ring peripheries. The ring thickness can be reduced to about 50 to 75 percent of the thickness before roll forging and preferably about 65 percent. The amount of roll-forging to which the ring is subjected is predetermined to accomplish the desired dimensional changes. The roll forging causes substantial reductions in the grain sizes of the ring metal for substantial distances inwardly from the inner and outer peripheries of the ring, preferably throughout the entire cross section of the ring entirely around its circumference. The substantial roll forging hot working also causes substantial orientation of the grain structure parallel to the circumferential surfaces of the ring to increase toughness and strength of the metal in the circumferential direction.

Importantly, the radial hot working closes voids that might have existed in the cast metal or welded billet and provides a more homogenous physical structure of the metal, toughens the metal, and increases its tensile strength. With a sufficient large roll forging forces, two different alloys can be metallurgically bonded together. This method of forming a compound steel ring billet is significantly less expensive than, for example, the centrifugal casting approach described above. Additionally, cores and shells of greater variability can be joined using the unique roll forging process as described above.

The ring 112 can subsequently be machined by conventional means and methods to the desired dimensions and shape. The shape of the raceway is designed in conventional manner and is machined in conventional manner. The remaining portions of the race are machined to desired shapes and dimensions by conventional means and methods; and if gear teeth are desired on the outer periphery, they are also machined. Finally, the rings 112 can subsequently heat treated using known hardening processes.

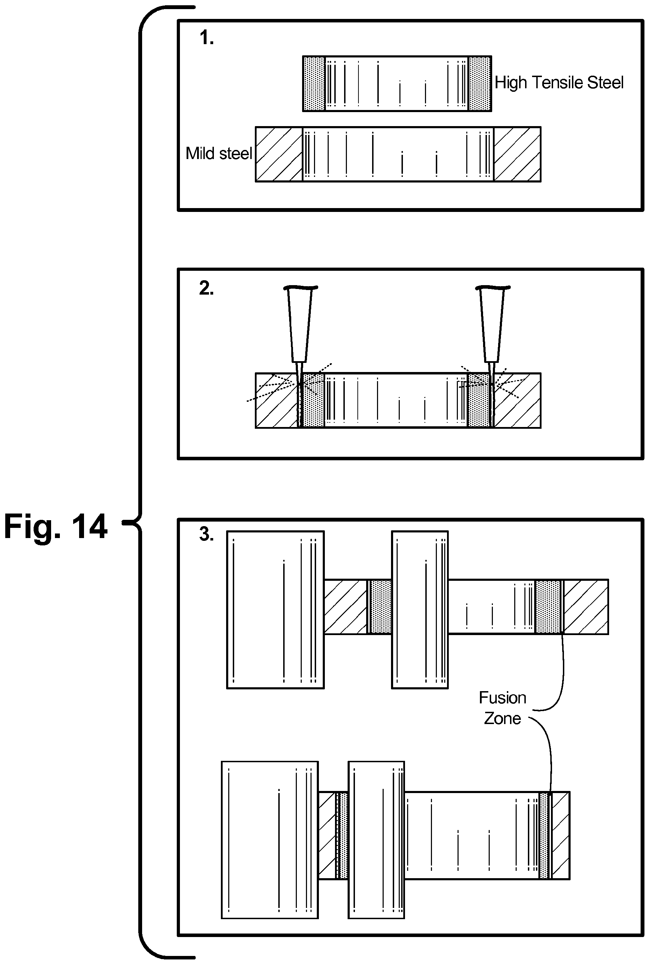

Referring now to FIGURE 14, a process of forming a bearing element is disclosed. At step 1, a determination and selection of two different alloys is made. In this example, high tensile steel and mild steel rings are selected based on the bearing loads, environment of use, etc. At step 2, the two rings of different steel are welded together via an electron beam welding EBW process. A significant benefit of the EBW process is a relatively narrow and deep fusion zone. At step 3, the combined rings are processed via known ring-rolling devices in order to achieve the desired bearing thickness, diameter and height dimensions. Subsequent to this step, the bearing elements can be heat treated or machined in manners similar to prior art bearing rings.

In another bearing application, the manufacturing process begins with a compound steel plate having at least two different layers. A fusion zone exists between a high alloyed steel layer and a mild steel base. Using known flat bearing production processes, the compound steel plate can be engineered to perform in a variety of load conditions, environments, etc. For example, the thicknesses of the hard high-alloyed layer and mild steel base can be predetermined. Importantly, this design process is not limited by the ability of carbon to diffuse into the steel matrix as required in traditional hardening processes.

A unique application of large bearings manufactured in accordance with the present invention can now be described. One embodiment of the invention concerns an azimuth bearing for the transmission of high axial forces and large flexural moments with relative small movements between the bearing components, such as seen in wind power installations with the azimuth bearing supporting the machine head above the pylon head.

In its specific aspect the invention concerns a wind power installation having a plain bearing of the above-described kind between a pylon-supported machine head and the pylon head, wherein provided between the pylon head and the machine head is a tracking drive for rotation of the machine head about the vertical axis of the pylon, in dependence on wind direction, wherein the plain bearing is adapted to guide the machine head in the radial direction.

The rotary bearing which is generally referred to as an azimuth bearing makes it possible--by means of the tracking drive--to adjust the rotor which receives the wind power, in such a way that, depending on the respective wind direction, the highest level of efficiency is achieved and in addition, when the installation is stopped, the loading on all components of the installation is kept as low as possible. Usually, the rotary bearing which must be of large diameter in high-output wind power installations comprises a rotary ball-type connection. A compound steel bearing according to the invention is substantially better suited to carrying high forces when small movements are involved. The bearings in accordance with the present invention can carry vertical forces which occur in the axial direction both in the direction of an applied load and also in the lifting-off direction.

Generally, a wind turbine includes a rotor having multiple blades. The rotor is mounted to a housing or nacelle, which is positioned on top of a truss or tubular tower. Utility grade wind turbines (i.e., wind turbines designed to provide electrical power to a utility grid) can have large rotors (e.g., 30 or more meters in diameter). Blades on these rotors transform wind energy into a rotational torque or force that drives one or more generators that may be rotationally coupled to the rotor through a gearbox. The gearbox steps up the inherently low rotational speed of the turbine rotor for the generator to efficiently convert mechanical energy to electrical energy, which is fed into a utility grid.

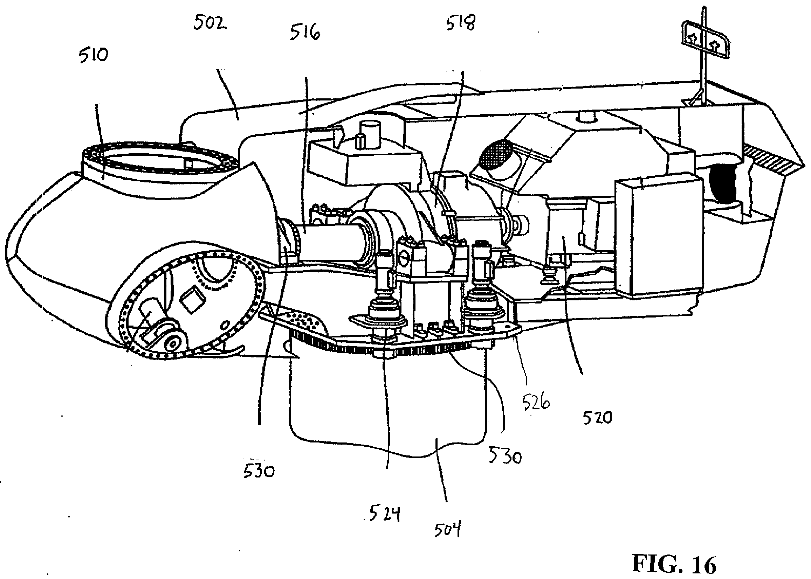

In some configurations and referring to FIGS. 15 and 16, a wind turbine 500 comprises a nacelle 502 housing a generator (not shown in FIG. 15). Nacelle 502 is mounted atop a tall tower 504, only a portion of which is shown in FIG. 15. Wind turbine 500 also comprises a rotor 506 that includes one or more rotor blades 508 attached to a rotating hub 510. Although wind turbine 500 illustrated in FIG. 15 includes three rotor blades 508, there are no specific limits on the number of rotor blades 508 required by the present invention. The drive train of the wind turbine includes a main rotor shaft 516 (also referred to as a "low speed shaft") connected to hub 510 via main bearing 530 and (in some configurations), at an opposite end of shaft 516 to a gear box 518. Gear box 518 drives a high speed shaft of generator 520. In other configurations, main rotor shaft 516 is coupled directly to generator 520. Yaw drive 524 and yaw deck 526 provide a yaw orientation system for wind turbine 500. A large azimuth bearing 530 is positioned between yaw deck 526 and tower 504.

The efficiency of a wind turbine depends on many parameters including the orientation of the nacelle, or more specifically the location of the rotor plane with respect to the direction of the air stream. This is typically controlled by the yaw drive or azimuth-drive, which orients the nacelle into the wind. In modem wind turbines electrical and mechanical components form a yaw drive. More specifically, an electric high-speed drive motor is coupled by a gear reducer having a drive pinion gear engaging a bull gear. Usually the electric drive motor, the gear reducer, and the drive pinion gear are mounted on the nacelle's bedplate while the bull gear is fixed to the tower.

It will thus be observed that configurations of the present invention provide wind turbines with bearings that are cost effectively manufactured. Moreover, some configurations of the present invention will also be observed to provide other advantages, such as light weight construction.

In a novel bearing manufacturing process in accordance with the present invention, includes steps of identifying the loads at relevant areas of the bearing and selecting appropriate alloys for use within the identified areas in view of load conditions, environment, etc. Ideally two or more different alloys are selected for use within the bearing. The different alloys can be pre-fused together via friction fit or the above described EBW process. The alloyed elements are then fused together in an appropriate ring rolling process. Alternatively, for some bearings the alloyed elements can simply be fused via the EBW process. Subsequent to the fusing process, the blanks can be machined and/or heat treated to suit the particular application or environment.

Various modifications can be made in the processes and products described above. For example, the compressive or upsetting hot working may be carried out after, rather than before, the roll forging as described above, or both before and after the roll forging hot working. Moreover, it is possible under certain circumstances to omit completely the upsetting hot working, although in general it is beneficial in providing hot working transverse to the hot working provided by the roll forging. Furthermore, a ring of greater width can be cast and hot worked by roll forging and, then after cooling, be cut into more than one ring blank out of each portion a bearing race may be provided.

Furthermore, depending on characteristics desired, the races after machining and hardening of the raceways, may be given no further treatment, or may be given additional heat treatment over part or all of the metal away from the raceways. For example, the gear teeth cut into a race may be case hardened by known methods and means. As another example, all the metal away from the raceways may be moderately hardened by known means and methods as to impart moderate hardness to gear teeth, or a combination of such moderate hardening and case hardening of gear teeth can be used.

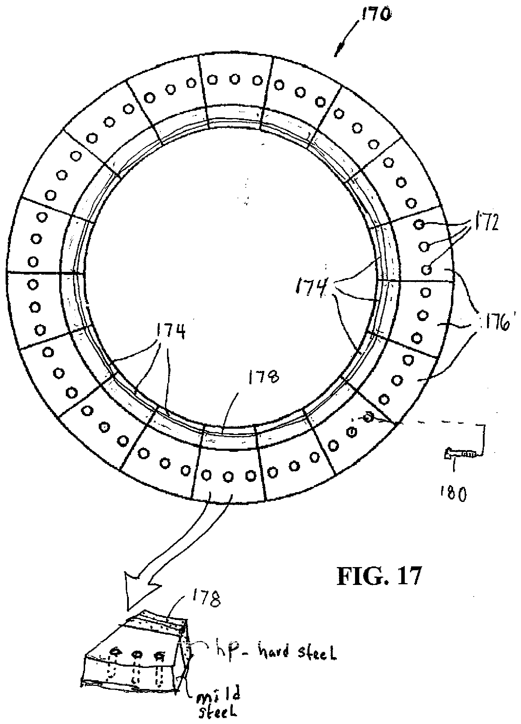

Furthermore, while ball bearings and their races are discussed above, it is apparent that the invention is applicable to roller or other types of bearings and their races. For example, FIGURE 17 illustrates a bottom half portion of an azimuth bearing 170 manufactured in accordance with the present invention which has been segmented so as to permit more efficient installation, repair or replacement after damage. Bearing 170 include mounting apertures 172 through which fasteners (not shown) are used to secure the bearing segments to a frame or other structure. As described above, portions of each bearing segment may have a high-alloyed region and a mild steel base. In the bearing 170 of FIGURE 17, the high alloyed region is designated 174 and a mild steel base is designated 176. An annular groove 178 is cut into the hardened portion, hp, and a plurality of roller balls (not shown) can move within the groove 178. A plurality of fasteners 180 would be used to secure the bearing 170 to its support. A top half of the azimuth bearing 170 could be substantially identical to that shown in FIG. 17. It would be appreciated that a variety of different segment configurations could be utilized to practice different bearing types.

While most of the above disclosures involve the use of steel of different carbon contents, it is apparent that steels of alloying ingredients other than those discussed above may be used and cast and worked according to the present invention, and that blanks produced according to the present invention may be used for purposes other than races of the bearings illustrated.

Although the present invention and its advantages have been described in detail, it should be understood that various changes, substitutions and alterations can be made herein without departing from the scope of the invention. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed that perform substantially the same function or achieve substantially the same result as the corresponding embodiments described herein may be utilized according to the present invention. Accordingly, the following claims are intended to include within their scope such processes, machines, manufacture, compositions of matter, means, methods, or steps.

## Claims

1. A method of forming a bearing element comprising:
selecting a high tensile steel layer (174) having bearing properties sufficient to carry a desired bearing load;
selecting a mild steel base layer (176) with at least an enhanced ductility relative to the high tensile steel layer;
fusing the high tensile steel layer (174) to the mild base layer (176), said fusing creating a fusion zone between the layers and defining a plurality of bearing segments with said segments being joined together to define a composite bearing assembly (170) having an inside circumference and an outside circumference;
machining at least a portion of the high tensile steel layer (174) into an annular groove (178) adapted to engage a plurality of roller balls, wherein the annular groove is located between the inside circumference and the outside circumference of the composite bearing assembly (170); and
machining the mild steel base layer (176) into a configuration adapted to support the high tensile steel layer (174) upon a base surface of an external machine
which further comprises a plurality of open-ended cavities (172) through which a plurality of threaded fasteners (180) are received to secure each of the plurality of bearing segments to the base surface.

2. A method according to Claim 1, wherein said fusing includes one or more of: a ring rolling process or an electron-beam-welding process.

3. A method according to Claim 1, further comprising:
hardening at least a portion of the high tensile steel layer (174) subsequent to said machining.

4. A method according to Claim 3, wherein the composite bearing assembly (170) defines a ring bearing.

5. A method according to Claim 4, wherein the ring bearing is an azimuth bearing (530) adapted to movably support a portion of a wind turbine (500).

6. A composite bearing comprising:
a plurality of bearing segments with each bearing segment comprising a high tensile steel layer (174) and a mild steel base layer (176), said layers being fused together across a fusion zone, with said segments being joined together to define the composite bearing (170), the composite bearing (170) having an inside circumference and an outside circumference;
a raceway comprising an annular groove (178) machined across the plurality of bearing segments wherein the annular groove is located between the inside circumference and the outside circumference of the composite bearing (170) and is adapted to accept a plurality of roller balls; and
a retention structure machined into at least the mild steel base layer (176),
wherein the retention structure includes a plurality of open-ended cavities (172) though which a plurality of threaded fasteners (180) are received to secure each of the plurality of bearing segments to said underlying bearing support.

7. A composite bearing according to Claim 6, wherein a cross-section of the raceway (178) is semi-circular.

8. A composite bearing according to Claim 6, wherein the underlying base support is connected to base of a wind turbine (500), with the composite bearing defining a ring bearing supporting at least a rotating component of the wind turbine (500).

9. A composite bearing according to Claim 6, wherein the layers (174, 176) of the bearing segments are fused together during a ring rolling process, an electron-beam-welding process, or other known steel fusing processes.

10. A composite bearing according to Claim 6, wherein gear portions are machined into each of the bearing segments, and together said plurality of gear portions defining a ring gear.

11. A composite bearing according to Claim 6, wherein the raceway (178) is machined across the high tensile steel layer (174) of each of the plurality of bearing segments.

## Patentansprüche

1. Verfahren zur Bildung eines Lagerelements, umfassend:
Auswählen einer hochfesten Stahlschicht (174), die Lagereigenschaften aufweist, die ausreichend sind, um eine gewünschte Lagerbelastung zu tragen;
Auswählen einer Weichstahl-Grundschicht (176) mit wenigstens einer relativ zur hochfesten Stahlschicht verstärkten Duktilität;
Aufschmelzen der hochfesten Stahlschicht (174) auf die Weichstahlschicht (176), wobei dieses Aufschmelzen einen Schmelzbereich zwischen den Schichten erzeugt und eine Vielzahl von Lagersegmenten definiert, wobei die Segmente zusammengefügt werden, um eine Verbundlageranordnung (170) zu definieren, die einen inneren Umfang und einen äußeren Umfang aufweist;
maschinelles Bearbeiten von wenigstens einem Abschnitt der hochfesten Stahlschicht (174) zu einer ringförmigen Nut (178), die dafür geeignet ist, mit einer Vielzahl von Rollkugeln in Eingriff zu gelangen, wobei die ringförmige Nut zwischen dem inneren Umfang und dem äußeren Umfang der Verbundlageranordnung (170) angeordnet ist; und
maschinelles Bearbeiten der Weichstahl-Grundschicht (176) zu einer Konfiguration, die dafür geeignet ist, die hochfeste Stahlschicht (174) auf einer Grundfläche einer externen Maschine zu halten,
die ferner eine Vielzahl von offenendigen Hohlräumen (172) umfasst, durch die eine Vielzahl von mit Gewinde versehenen Befestigungselementen (180) aufgenommen werden, um jedes der Vielzahl von Lagersegmenten mit der Grundfläche fest zu verbinden.

2. Verfahren nach Anspruch 1, wobei das Aufschmelzen eines oder mehreres von einem Ringwalzverfahren oder einem Elektronenstrahlschweißverfahren umfasst.

3. Verfahren nach Anspruch 1, ferner umfassend:
Härten von wenigstens einem Abschnitt der hochfesten Stahlschicht (174) nach dem maschinellen Bearbeiten.

4. Verfahren nach Anspruch 3, wobei die Verbundlageranordnung (170) ein Ringlager definiert.

5. Verfahren nach Anspruch 4, wobei das Ringlager ein Azimutlager (530) ist, das dafür geeignet ist, einen Abschnitt einer Windturbine (500) beweglich zu lagern.

6. Verbundlager, umfassend:
eine Vielzahl von Lagersegmenten, wobei jedes Lagersegment eine hochfeste Stahlschicht (174) und eine Weichstahl-Grundschicht (176) umfasst, wobei die Schichten durch einen Schmelzbereich miteinander verschmolzen sind, wobei die Segmente zusammengefügt sind, um das Verbundlager (170) zu definieren, wobei das Verbundlager (170) einen inneren Umfang und einen äußeren Umfang aufweist;
einen Laufring, umfassend eine ringförmige Nut (178), die quer durch die Vielzahl von Lagersegmenten maschinell eingearbeitet ist, wobei die ringförmige Nut zwischen dem inneren Umfang und dem äußeren Umfang des Verbundlagers (170) angeordnet ist und dafür geeignet ist, eine Vielzahl von Rollkugeln aufzunehmen; und
eine Rückhaltestruktur, die in wenigstens die Weichstahl-Grundschicht (176) maschinell eingearbeitet ist,
wobei die Rückhaltestruktur eine Vielzahl von offenendigen Hohlräumen (172) aufweist, durch die eine Vielzahl von mit Gewinde versehenen Befestigungselementen (180) aufgenommen sind, um jedes der Vielzahl von Lagersegmenten mit der darunterliegenden Lagerauflage fest zu verbinden.

7. Verbundlager nach Anspruch 6, wobei ein Querschnitt des Laufrings (178) halbkreisförmig ist.

8. Verbundlager nach Anspruch 6, wobei die darunterliegende Basisauflage mit der Basis einer Windturbine (500) verbunden ist, wobei das Verbundlager ein Ringlager definiert, das wenigstens eine sich drehende Komponente der Windturbine (500) lagert.

9. Verbundlager nach Anspruch 6, wobei die Schichten (174, 176) der Lagersegmente während eines Ringwalzverfahrens, eines Elektronenstrahlschweißverfahrens oder anderer bekannter Stahlschmelzverfahren miteinander verschmolzen werden.

10. Verbundlager nach Anspruch 6, wobei Verzahnungsabschnitte in jedes der Lagersegmente maschinell eingearbeitet sind und die Vielzahl von Verzahnungsabschnitten zusammen einen Zahnkranz definieren.

11. Verbundlager nach Anspruch 6, wobei der Laufring (178) quer durch die hochfeste Stahlschicht (174) von jedem der Vielzahl von Lagersegmenten maschinell eingearbeitet ist.

## Revendications

1. Procédé pour former un élément de palier comprenant :
la sélection d'une couche d'acier haute résistance (174) ayant des propriétés portantes suffisantes pour supporter une charge de palier souhaitée ;
la sélection d'une couche de base en acier doux (176) ayant au moins une ductilité améliorée par rapport à la couche d'acier haute résistance ;
la jonction par fusion de la couche d'acier haute résistance (174) et de la couche de base en acier doux (176), ladite jonction créant une zone de jonction entre les couches et définissant une pluralité de segments de palier, lesdits segments étant réunis les uns aux autres pour définir un ensemble de palier composite (170) ayant une circonférence intérieure et une circonférence extérieure ;
l'usinage d'au moins une partie de la couche d'acier haute résistance (174) en une gorge annulaire (178) adaptée pour venir en prise avec une pluralité de billes de roulement, la gorge annulaire étant située entre la circonférence intérieure et la circonférence extérieure de l'ensemble de palier composite (170) ; et
l'usinage de la couche de base en acier doux (176) selon une configuration adaptée pour supporter la couche d'acier haute résistance (174) sur la surface de base d'une machine externe qui comprend en outre une pluralité de cavités (172) ouvertes à leurs extrémités à travers lesquelles est reçue une pluralité de fixations filetées (180) afin de fixer chaque segment de la pluralité de segments de palier à la surface de base.

2. Procédé selon la revendication 1, dans lequel ladite jonction par fusion comprend un ou plusieurs processus parmi un processus de laminage circulaire ou un processus de soudage par faisceau d'électrons.

3. Procédé selon la revendication 1, comprenant en outre :
le durcissement d'au moins une partie de la couche d'acier haute résistance (174) après ledit usinage.

4. Procédé selon la revendication 3, dans lequel l'ensemble de palier composite (170) définit un palier annulaire.

5. Procédé selon la revendication 4, dans lequel le palier annulaire est un palier azimut (530) adapté pour supporter de manière mobile une partie d'une éolienne (500).

6. Palier composite comprenant :
une pluralité de segments de palier avec chaque segment de palier comprenant une couche d'acier haute résistance (174) et une couche de base en acier doux (176), lesdites couches étant jointes par fusion l'une à l'autre dans toute la zone de jonction avec lesdits éléments réunis les uns aux autres pour définir le palier composite (170), le palier composite (170) ayant une circonférence intérieure et une circonférence extérieure ;
une piste comprenant une gorge annulaire (178) usinée dans toute la pluralité de segments de palier, la gorge annulaire étant située entre la circonférence intérieure et la circonférence extérieure du palier composite (170) et adaptée pour accepter une pluralité de billes de roulement ; et
une structure de retenue usinée dans au moins la couche de base en acier doux (176),
la structure de retenue comprenant une pluralité de cavités (172) ouvertes à leurs extrémités à travers lesquelles est reçue une pluralité de fixations filetées (180) afin de fixer chaque segment de la pluralité de segments de palier audit support de palier sous-jacent.

7. Palier composite selon la revendication 6, dans lequel la coupe transversale de la piste (178) est semi-circulaire.

8. Palier composite selon la revendication 6, dans lequel le support de base sous-jacent est raccordé à la base d'une éolienne (500) avec le palier composite définissant un palier annulaire supportant au moins un composant rotatif de l'éolienne (500).

9. Palier composite selon la revendication 6, dans lequel les couches (174, 176) des segments de palier sont jointes par fusion l'une à l'autre lors d'un processus de laminage circulaire, d'un processus de soudage par faisceau d'électrons ou de tout autre processus connu de jonction par fusion de l'acier.

10. Palier composite selon la revendication 6, dans lequel des parties d'engrenage sont usinées dans chacun des segments de palier et, ensemble, ladite pluralité de parties d'engrenage définit un engrenage annulaire.

11. Palier composite selon la revendication 6, dans lequel la piste (178) est usinée dans toute la couche d'acier haute résistance (174) de chaque segment de la pluralité de segments de palier.
